(19) Europäisches Patentamt
European Patent Office
Office européen des brevets

(11) **EP 4 056 273 A1**

(12) **EUROPEAN PATENT APPLICATION**

(43) Date of publication:
**14.09.2022  Bulletin 2022/37**

(21) Application number: **21162159.4**

(22) Date of filing: **11.03.2021**

(51) International Patent Classification (IPC):
**B01L 3/00** (2006.01)    **B01J 19/00** (2006.01)
**B01J 21/06** (2006.01)    **B01J 23/06** (2006.01)
**B01J 35/00** (2006.01)    **C01G 9/02** (2006.01)
**B82Y 40/00** (2011.01)    **H01L 33/28** (2010.01)
**C02F 1/00** (2006.01)

(52) Cooperative Patent Classification (CPC):
**B01L 3/502707; B01J 19/0093; B01J 21/063; B01J 23/06; B01J 35/004; C01G 9/02; C02F 1/725;** B01L 2300/0874; B01L 2300/0887; B01L 2300/0896; B82Y 40/00; C02F 1/32; C02F 2101/308; C02F 2305/08

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Universite Gustave Eiffel**
  **77420 Champs-sur-Marne (FR)**
• **Eden Tech**
  **75015 Paris (FR)**

(72) Inventors:
• **LEPRINCE-WANG, Yamin**
  **77164 Ferrières-en-Brie (FR)**
• **MARTIN, Nathan**
  **75019 Paris (FR)**
• **ROY, Emmanuel**
  **75015 Paris (FR)**
• **PERRAULT, Cécile**
  **75015 Paris (FR)**
• **LACOUR, Vivien**
  **75018 Paris (FR)**

(74) Representative: **Demulsant, Xavier**
  **Dejade & Biset**
  **8 Avenue Jean Bart**
  **95000 Cergy (FR)**

(54) **IN SITU PHOTOCATALYST NANOSTRUCTURE GROWTH FOR MICRO-REACTOR FUNCTIONALIZATION**

(57)  Method for synthesizing photocatalyst semi-conductor nanostructure (16) into a continuous flow rate microfluidic reactor (1) for fluid purification, comprising the following steps: realizing a nanocristallite seedlayer (12) on a substrate (2) by: applying a homogeneous layer (13) of a seed solution (11) composed by precursors and a spreader compound; realizing a solid thermoplastic chip (3) having one structured layer with: microfluidic parallel channels (4) formed by walls (14) and slots, inputs (5) and outputs (6) of a fluid, connected to the channels; the thermoplastic chip being an adhesive polymer or a polymer with an adhesive layer, and letting UV light and visible light pass through; fixing the thermoplastic chip onto the substrate which presents the nanocristallite seedlayer, without deforming the structured layer, the assembly of the thermoplastic chip with the substrate forming the microfluidic reactor; injecting and circulating a nanowire growth solution (15) into the microfluidic reactor by inputs and outputs, at a constant flowrate, the microfluidic reactor being placed on heating means (7) so as to obtain homogeneous nanowires (16) which grow from nanocristallite seedlayer in the slots between the walls of the microfluidic reactor.

Figure 3

**Description**

FIELD OF THE INVENTION

The invention relates to a method for synthesizing photocatalyst semi-conductor nanostructure into a continuous flow rate microfluidic reactor for fluid purification.

STATE OF ART

Due to the combined effects of growing human population, climate change and increasing industrial consumption, the pressure on water resources is steadily rising and now becomes an urgent issue. To ensure the sustainability of Humanity's water supplies, it is necessary to find efficient, low-cost and environmentally friendly ways to purify wastewater effluents.

One of the most studied solution for water purification is the photocatalytic process, a sustainable degradation process using a photocatalyst such as ZnO or $TiO_2$. Those two materials are large-band gap metallic oxides with similar photocatalytic properties. However, ZnO presents the advantages of being a low-cost photocatalyst, whose raw materials are abundant in nature. Thus, in the optic of creating an environmentally friendly and efficient photocatalytic reactor, ZnO seems to be a better choice.

To increase the contact between the photocatalyst and the molecules to be degraded, nanostructures are often used, such as nanoparticles, nanorods or nanowires. Those nanostructures present high surface-to-volume ratios, which increases contact opportunity between the material and the molecules to be degraded, and so, the photocatalytic efficiency of the samples.

In older studies, Gabriela Byzynski, Camila Melo and their colleagues (Byzynski et al., 2017, "The interplay between morphology and photocatalytic activity in ZnO and N-doped ZnO crystals" Mater. Des., 120, 363-375) use a direct dispersion of nanostructured photocatalysts into water. In this article, the nanostructured photocatalysts are synthesized and then reduced to powder. However, once the purification is done, the separation of the photocatalytic particles requires further filtration of the effluents, adding significant time and energy costs, and reducing the yield of depolluted water. Furthermore, considering the reduced size of the nanoparticles, leakage into the environment is difficult to avoid, with uncertain consequences.

To prevent these risks and the filtering step, the nanostructures can be immobilized on a substrate, as in the study of M. C. Yeber (M.C. Yeber, et al., 2000 "Photocatalytic degradation of cellulose bleaching effluent by supported TiO2 and ZnO", Chemosphere 41, 1193-1197). This, however, tends to reduce the general photocatalytic efficiency due to the unfavourable surface-to-volume ratio: a large volume of water is in contact with a relatively small photocatalytic surface.

Performing photocatalysis with immobilized nanostructures at high-efficiency is achievable by incorporating them into microreactors, as previously done by several synthesis method, such as chemical bath deposition, sol-gel, electrospinning, and hydrothermal growth.

Microreactors have several very interesting properties for photocatalytic water depollution: the reduced size of the microchannels increases contact between the pollutant and the photocatalyst, while reducing the absorption of light irradiation by the liquid. This is especially important in the case of degrading coloured pollutants. The continuous stream and small size of the microchannels also create a situation where mass transfer is no longer limiting the kinetic of the reaction, improving the reaction rate. All of these advantages imply that the polluted effluents are degraded in less time than in bigger reactors.

A major reported limitation of microreactors is the very small liquid quantities that can be treated within microchannels (often in the range of mL/h), and the high pressure required to achieve high-flowrate, making the solution costly for large treatment volumes. However, it is possible to circumvent the flowrate problem by plugging microreactors to one another in chain. Sadly, this means the pressure needed to ensure the flow of liquid will be even higher.

SUMMARY OF THE INVENTION

Here, the invention presents a method for synthesizing photocatalyst semi-conductor nanostructure into a continuous flow rate microfluidic reactor for fluid purification, comprising the following steps:

- step 1: realizing a nanocristallite seedlayer on a substrate by:
  applying a homogeneous layer of a seed solution composed by precursors of photocatalyst semi-conductor;
- step 2: realizing a solid thermoplastic chip having one structured layer with:

  • walls, intended to be in contact with the substrate, to form microfluidic channels,

- inputs and outputs of a fluid intended to circulate in the channels between the inputs and the outputs ;
  the thermoplastic chip letting UV light and visible light pass through,
  the thermoplastic chip being an adhesive polymer or being a polymer with an adhesive layer;

- step 3 : fixing the thermoplastic chip onto the substrate which presents the nanocristallite seedlayer, without deforming the structured layer, the assembly of the thermoplastic chip with the substrate forming the microfluidic reactor with the microfluidic channels which present the nanocristallite seedlayer of the semi-conductor on the substrate between the walls ;

- step 4: injecting and circulating a nanowire growth solution into the microfluidic reactor by inputs and outputs, at a constant flowrate, via a fluid circuit linked to the inputs and outputs of the microfluidic reactor, the microfluidic reactor being placed on heating means so as to obtain nanowires which grow from nanocristallite seedlayer from the substrate between the walls of the microfluidic reactor.

The continuous flow rate microfluidic reactor can be a high flow rate microfluidic reactor, the structured layer enabling a debit superior to 5 $m^3$/day per $m^2$ of microfluidic chamber surface at pressure < 2 bar, with Reynold's number inferior to 1500. The pressure is at the inlet of the reactor; it is provided by the volume accumulation of the liquid.

The invention also relates to a microfluidic reactor having photocatalyst semi-conductor nanostructure for fluid purification.

Thus, researchers and applicants used a low-cost and environmentally friendly hydrothermal method to synthesize ZnO nanowires into a microreactor.

For example, the microreactor was realized with a Si-wafer substrate and a Flexdym™ chip, on which microchannels had been patterned. Flexdym™ is a thermoplastic polymer, developed and produced by the start-up Eden Tech, which presents very interesting properties for its use in microfluidics, such as biocompatibility, optical transparency, stable surface chemistry, low water evaporation and ease of use. The parameters of the synthesis have been investigated in order to find the optimal synthesis conditions for the photocatalytic efficiency.

BRIEF DESCRIPTION OF THE DRAWINGS

Other advantages and characteristics of the disclosed devices and methods will become apparent from reading the description, illustrated by the following figures, where:

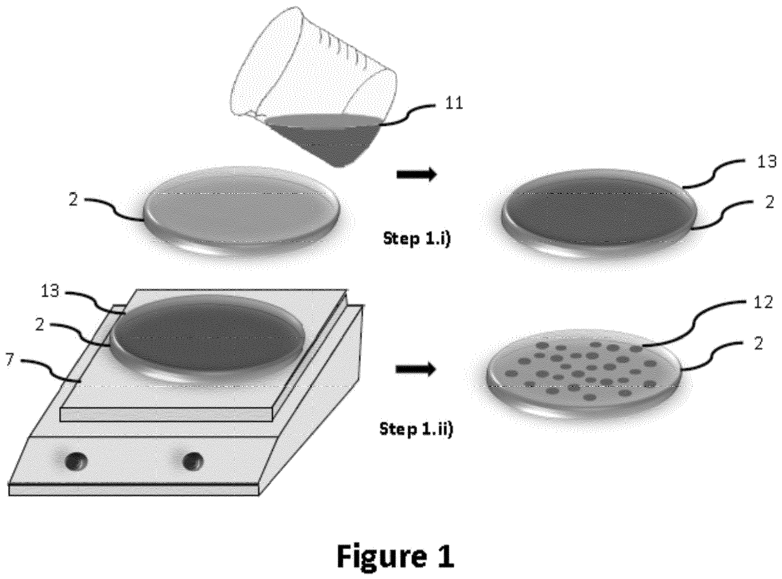

Figure 1 represents a drawing of the first step for realizing a microfluidic reactor with a photocatalyst semi-conductor nanostructure.

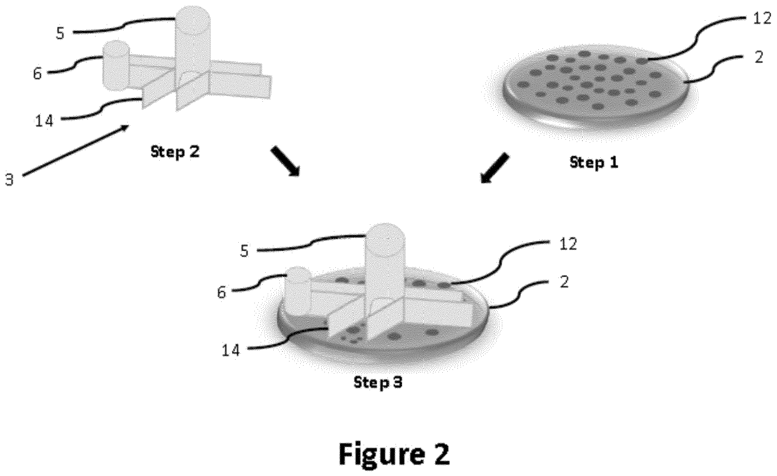

Figure 2 represents a drawing of the assembly between the first step and the second step to realize the third step for realizing a microfluidic reactor with a photocatalyst semi-conductor nanostructure.

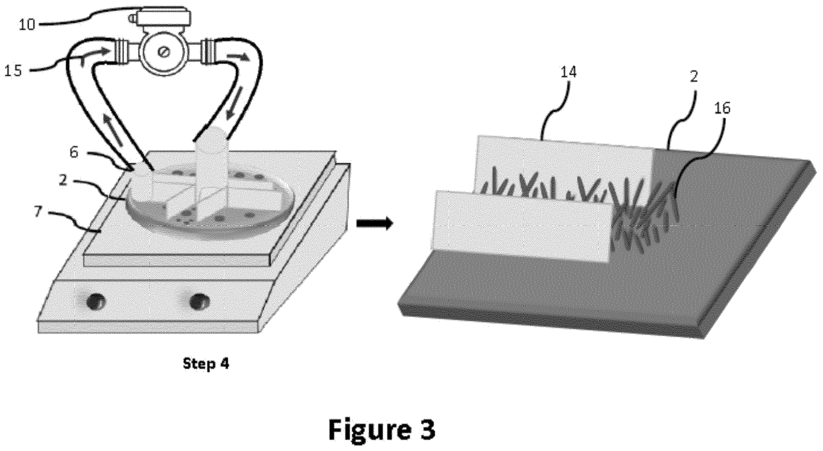

Figure 3 represents a drawing of the fourth step for realizing a microfluidic reactor with a photocatalyst semi-conductor nanostructure by a circulation of the nanowire growth solution into the microfluidic reactor.

Figure 4a represents a picture of an epoxy mold engraved with the reactor design.

Figure 4b represents a picture of press interior before the thermal pressing with the epoxy mold engraved with the reactor design.

Figure 4c represents a picture of a ready-to-use microfluidic reactor.

Figure 5 represents an in-situ ZnO nanowire synthesis set-up.

Figure 6 represents a graphic showing impact of the ZnO nanowire growth solution flowrate on the photocatalytic efficiency (the degradation rate of organic pollutants for the number of passes into the microfluidic reactor).

Figure 7 represents SEM images of the synthesized nanostructures at the different growth solution flowrates: (a) 100 $\mu$L/min (b) 200 $\mu$L/min, (c) 300 $\mu$L/min, (d) 400 $\mu$L/min.

Figure 8 represents a graphic showing the impact of the ZnO nanowire growth time on the photocatalytic efficiency (the degradation rate of organic pollutants for the number of passes into the microfluidic reactor).

Figure 9 represents SEM images of the synthesized nanowires with different growth time: 30 min (a), 1h (b), 1h15 (c), and 1h30 (d).

Figure 10 represents a graphic showing the impact of the growth temperature on the photocatalytic efficiency (the degradation rate of organic pollutants for the number of passes into the microfluidic reactor).

Figure 11 represents SEM images of the synthesized nanostructures at different temperatures: a) 80°C, b) 85°C and c) 90°C.

DETAILED DESCRIPTION

The invention relates to a method for synthesizing photocatalyst semi-conductor nanostructure 16 into a continuous flow rate microfluidic reactor 1 for fluid purification, comprising the following steps:

- step 1: realizing (preparing) a nanocristallite seedlayer 12 on a substrate 2 by applying a homogeneous layer 13 of a seed solution 11 composed by precursors of photocatalyst semi-conductor;

- step 2: realizing (producing) a solid thermoplastic chip 3 having one structured layer with:

  • walls 14 for creating (realizing) with the substrate 2 microfluidic channels 4,
  • inputs 5 and outputs 6 of a fluid intended to circulate in the channels 4 between the inputs 5 and the outputs 6 ;
    the thermoplastic chip 3 letting UV light and visible light pass through,
    the thermoplastic chip 3 being an adhesive polymer or being a polymer with an adhesive layer;

- step 3 : fixing the thermoplastic chip 3 onto the substrate 2 which presents the nanocristallite seedlayer 12, without deforming the structured layer, the assembly of the thermoplastic chip 3 with the substrate 2 forming the microfluidic reactor 1 with the microfluidic channels 4 which present the nanocristallite seedlayer 12 of the semi-conductor on the substrate 2 between the walls 14 ;

- step 4: injecting and circulating a nanowire growth solution 15 into the microfluidic reactor 1 by inputs 5 and outputs 6, at a constant flowrate, via a fluid circuit 9 linked to the inputs 5 and outputs 6 of the microfluidic reactor 1, the microfluidic reactor 1 being placed on heating means 7 so as to obtain nanowires 16 which grow from nanocristallite seedlayer 12 from the substrate 2 between the walls 14 of the microfluidic reactor 1.

Advantageously, the step 1 has two sub-steps :

i) applying a homogeneous layer 13 of a seed solution 11 composed by precursors of photocatalyst semi-conductor;
ii) heating the substrate 2 to remove the spreader compound and to form the nanocristallite seedlayer 12 of the semi-conductor on the substrate 2.

Advantageously, the seed solution 11 is composed by precursors of photocatalyst semi-conductor and a spreader compound favouring the spreading of the precursors on the substrate 2.
The flow rate of the microfluidic reactor 1 can be variable. For example, starting with a high flow rate for a short time to pre-fill the reactor, before returning to a lower flow rate for growth.
In a possible embodiment, the continuous flow rate microfluidic reactor 1 is high flow rate microfluidic reactor 1, the structured layer being capable of a debit superior to 5 $m^3$/day per $m^2$ of microfluidic chamber surface at pressure < 2 bar, with Reynold's number inferior to 1500.
Advantageously, the microfluidic channels 4 lets the fluid to circulate from inputs 5 to the outputs 6.
Advantageously, the seed solution 11 is composed by semi-conductor ions with polymer-based solution or aqueous solution. More precisely, the seed solution 11 is composed by ZnO ions or $TiO_2$ ions.
Advantageously, the nanowire growth solution 15 is composed of the precursors of photocatalyst semi-conductor.
In another embodiment, the step for realizing (preparing) the nanocristallite seedlayer 12 follows this protocol (steps):

- (i) cleaning rough surfaces of the substrate 2 for improving their wettability;
- (ii) displacing the substrate 2 in a seed solution 11, and impregnation of at least one rough surface of the substrate 2 by the seed solution 11, the seedlayer 12 coating the asperities of the rough surface;

- (iii) taking the immerged substrate 2 out of the seedlayer 12,

without controlling the coating thickness and the coating homogeneity of the seedlayer 12 on the coated rough surface;

- (iv) drying the rough surface,
- (v) annealing the seedlayer 12 coating of the coated rough surface to obtain semiconductor nanocristallites;
- (vi) hydrothermal growth of semiconductor nanowires from the semiconductor nanocristallites, with an aqueous solution with semiconductor ions.

The substrate 2 can be composed of silicon or glass and during the step of realizing a nanocristallite seedlayer 12 on a substrate 2, the substrate 2 is heated at a temperature superior to 200°C.

In other embodiments, the substrate 2 is a thermoplastic polymer and during the step of realizing the nanocristallite seedlayer 12 on the substrate 2, the substrate 2 is heated at a temperature inferior to 120°C.

The substrate 2 can be a Si-wafer, glass-wafer, or quartz wafer.

Advantageously, the homogeneous layer 13 (of seed solution 11) is applied by spin coating.

Advantageously, the thermoplastic chip 3 comprises:

- a polycondensate of cyclodextrins; and/or
- an ethylene-vinyl alcohol copolymer; and/or
- a block copolymer, the block copolymer having a glass transition temperature below 0° C. and having a Young's modulus of less than 10 MPa; and/or
- a styrenic thermoplastic.

Advantageously, the solid thermoplastic chip 3 comprises channels 4, walls 14, slots, inputs 5 and outputs 6 being patterned on the thermoplastic chip 3.

The thermoplastic ship 3 lets UV light and visible light pass through and can be transparent.

The thermoplastic chip 3 can be fixed without external pressure.

The thermoplastic chip 3 can be fixed at a pressure of 2 bar.

Advantageously, the semi-conductor nanostructure 16 is doped, for instance with transition metals and/or noble metal with preference Fe or Ag for fluid depollution application.

Advantageously, the parameters for having homogeneous nanowires 16 inside micro-reactor 1 are: growth solution flowrate, temperature of the heating means 7, temperature of the growth solution, concentration of the growth solution.

Advantageously, the parameters are optimized during the step for circulating the growth solution 15 with a temperature of the heating means 7 which allows hydrothermal growth giving suitable nanowires covering the temperature range to respect the design change. More precisely, the temperature of heating means 7 is between 75°C and 95°C, during 30-90 min, and with corresponding Peclet Number between 0.2 and 0.5.

The method described by the invention makes it possible to obtain a microfluidic reactor 1 having photocatalyst semi-conductor nanostructure 16 for fluid purification. Advantageously, the microfluidic reactor 1 comprises a fluidic purification network, and the fluidic purification network is a three-dimensional array of microfluidic channels, each microfluidic channel being defined by one or more fluid-tight walls, each microfluidic channel having a height of less than 60 μm in a direction normal to the main direction of flow of the fluid, the microfluidic reactor comprising a plurality of distribution channels and a plurality of collection channels, the fluidic purification network connecting the distribution channels and the collection channels and being implemented at least by an array of microfluidic channels connected in parallel.

In a possible embodiment, the microfluidic reactor 1 follows a part or a combination of the following features of the patent application WO2019/053219:

- the microfluidic reactor 1 comprises at least three layers which are stacked on one another, at least two surfaces having one or more layers having, with respect to at least two layers, a pattern in the recess configured to form at least two microfluidic channels bidimensional arrays when the at least three layers are stacked ;

- the microfluidic reactor 1 comprises at least one distribution channel and at least one channel manifold, the microfluidic reactor 1 is connected to the one or more channels for the distribution and the one or more channels collectors, hydrodynamic drag of the one or more distribution channels and the one or more manifold channels being smaller than the hydrodynamic drag of the fluidic system sanitizing;

- the microfluidic reactor 1 comprises a pattern being configured to form at least in part one or more distribution channels, and at least in part one or more channels manifold ;

- the microfluidic reactor 1 comprises at least one primary channel passing through a plurality of layers adjacent to emerge respectively in at least one distribution channel and/or at least one header channel formed between two layers ;

- the microfluidic reactor 1 comprises a stack including a stacking of sub-stacks each formed of two layers, said two layers being of different materials ;

- the microfluidic reactor 1 comprises a stack including a stacking of sub-stacks each formed of three layers consecutive, both layers on either side of the sub-stack being of the same material ;

- the microfluidic reactor 1 comprises a layer having a polycondensate Cyclodextrins;

- the microfluidic reactor 1 comprises a layer having an ethylene vinyl alcohol copolymer;

- the microfluidic reactor 1 comprises a layer having a styrenic thermoplastic elastomer.

The system 8 described by the invention can be used for depolluting fluid from pollutants by several passages.

The system 8 is very efficient against organic pollutants, for example against Acid Red R14 (AR14), organic dye methylene blue (MB).

For example, with initial concentration of 10 $\mu$M, the time needed to degrade them to 100% is less than 1 minute under UV lamp.

The system 8 is efficient against all organic pollutants including dyes, drugs (antibiotics...), micro-organisms (bacteria, viruses...), pesticides, etc.

Methods and materials

A high-volume, low-pressure microfluidic photocatalytic bioreactor 1 (microfluidic reactor or micro-reactor) was created and demonstrated here. This high-flowrate microreactor 1, based on an innovative design developed by the start-up Eden Tech, was produced by a thermal pressing process, using Eden Tech easy-to-use and environment-friendly thermoplastic, Flexdym™.

ZnO nanowires (ZnO NWs) (the semiconductor) were then synthesized in situ, using an environment-friendly, low-cost, two-step hydrothermal method. Varying the synthesis parameters (growth solution flowrate, growth time and growth temperature) allowed us to get an insight of the optimal synthesis conditions for photocatalytic purposes. The in-situ grown nanowire morphology was characterized under Scanning Electron Microscopy (SEM) observation. The photocatalytic efficiency of the assynthetized microreactors 1 was tested by degrading continuous streams of water polluted with Acid Red 14 (AR14), a commonly used organic dye, under UV irradiation, followed by UV-visible spectrometry.

Advantageously, researchers and applicants found that the good results are obtained with the following synthesis parameters: a 1h growth time, a growth flowrate of 200 $\mu$L/min and a temperature of 80°C, as after 4 passes in the reactor, which is roughly equivalent to 40 seconds of UV light irradiation, the dye was degraded at 98%.

Researchers and applicants used a low-cost and environmentally friendly hydrothermal method to synthesize photocatalyst nanostructure into a micro-reactor 1 composed of a 4-inch Si-wafer and a thermoplastic chip 3, on which microchannels 4 had been patterned. The used thermoplastic chip 3 was developed and produced by Eden Tech, which presents very interesting properties for its use in microfluidics, such as biocompatibility, optical transparency, stable surface chemistry, low water evaporation and ease of use.

This micro-reactor 1 is suitable for fluid purification applications which need to treat large fluid quantities with minimal system volume.

Advantageously, the fluid is polluted water.

Using microfluidic system 8 can benefit from multi-advantages: the reduced size of the microchannels 4 increases contact between the pollutant and the photocatalyst, while reducing the absorption of light irradiation by the liquid (especially important in the case of degrading coloured pollutants); creating a situation where mass transfer is no longer limiting the kinetic of the reaction with the continuous stream and small size of the microchannels 4, then improving the reaction rate.

Performing photocatalysis with immobilized nanostructures at high-efficiency is achievable by incorporating them into micro-reactors.

For example, by using a micro-reactor 1 containing the ZnO nanowires with a growth time of 1 hour at 80°C, after 4 passes in the micro-reactor 1, which is roughly equivalent to 40 seconds of UV light irradiation, the organic dye with an initial concentration of 10 $\mu$M was degraded at 98%. Such micro-reactor 1 can reach a maximal flowrate of about 15 L/day. With their flexibility of parallel connection, a higher flowrate water purification system can be obtained by collecting several micro-reactors 1.

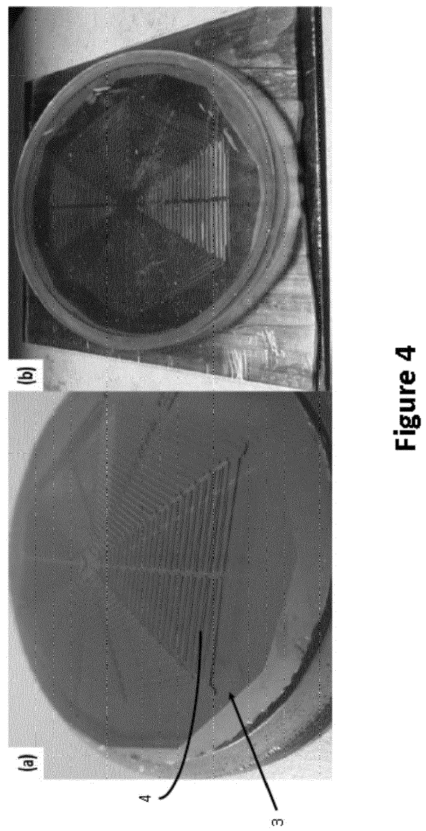

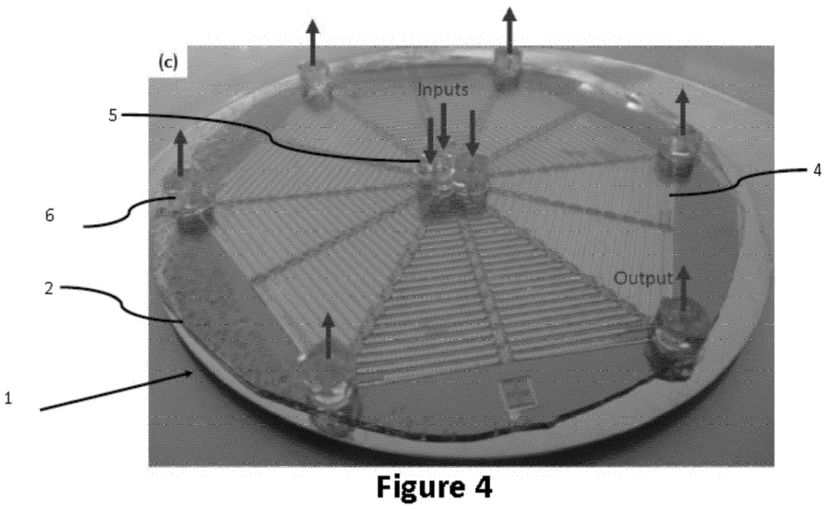

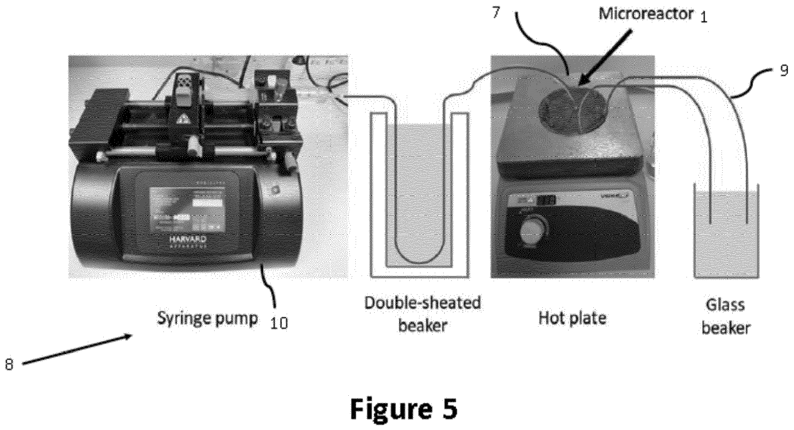

The 4-inch high flowrate micro-reactor 1 has three centred inputs 5 and six outputs 6, as shown in Figure 4c. Figure 5 shows the experimental set-up for in situ ZnO nanostructure growth.

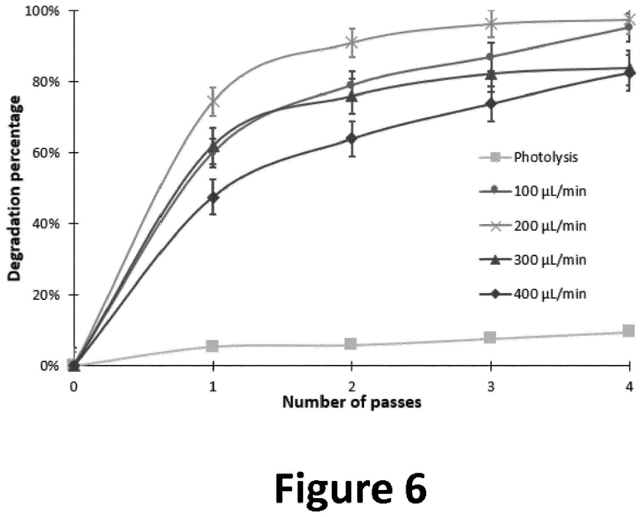

Figures 6, 8 and 10 show the degradation rate versus the number of passes made for each micro-reactor 1. Each pass represents 25 minutes of injection at 200 $\mu$L/min.

An example of nanowire growth solution 15 is:

a mixture in equal quantities of a 0,075 mol/L $Zn(NO_3)_2$ solution and a 0,0375 mol/L Hexamethylenetetramine (HMTA) solution. The resulting growth solution 15 was heated at 80°C using a thermostated bath and injected into the micro-reactor 1 with a syringe pump 10, at a constant flowrate for the desired growth time. During the circulation of the growth solution 15, the micro-reactor 1 was placed on a heating plate 7 (heating means) to ensure a constant temperature (80°C) throughout the process.

With optimized parameters (T = 80°C, growth solution flowrate = 200 $\mu$L/min, growth time = 1h), and by following the synthesis of the present invention, the result is a homogeneous ZnO nanowires layer inside micro-reactor 1.

The photocatalytic experiments were carried out, under UV lamp irradiation with irradiation intensity of 35 mW/cm$^2$ on microfluidic system 8 surface, by degrading an aqueous solution containing 10 $\mu$M of Acid Red R14 (AR14), injected into the micro-reactor 1 at a constant flowrate with a syringe pump 10. The water has been purified at $\sim$ 98% after 4 passes, as shown in Figure 6, knowing that the transit time of the liquid is of 10 seconds under the UV light, meaning that 4 passes are roughly equivalent to 40 seconds of photocatalytic process in the micro-reactor 1. This is an excellent photocatalytic performance comparing to macro-reactor, even in dynamic mode, the same degradation rate can be achieved after 2 hours with same initial pollutant concentration and under same UV intensity irradiation. For the small size classical microfluidic chamber, the same degradation has been obtained after few minutes' photocatalytic process.

The classical two-step hydrothermal method has been adapted for in situ semiconductor nanowire 16 growth inside high flowrate micro-reactor 1, an example of the described synthesis:

first, 4-inch circular Si wafers (substrate 2) were spin-coated with a precursor solution (seed solution 11) composed of 10g of poly-vinyl-alcohol (PVA) and 1g of Zinc Acetate dissolved into 100 mL of deionized water. The substrates 2 were then calcined at 500°C for 3 hours, to remove the PVA and to form a ZnO nanocristallite seedlayer 12. After the calcination, the thermoplastic chip 3 was bound into the substrate 2 for 4 hours at 120°C in an oven, without external pressure.

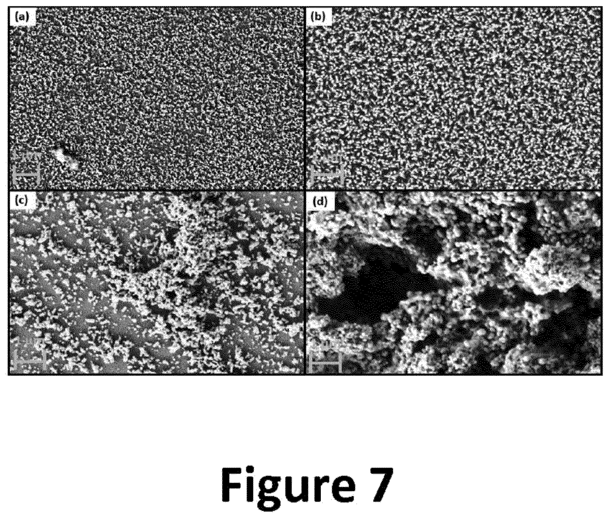

In order to obtain a homogeneous ZnO nanowires inside micro-reactor 1, as shown in Figure 7.

The micro-reactor design can be printed on 2 mm thick Flexdym™ chips (thermoplastic chip 3) by vacuum thermal pressing (Sublym100TM, Eden Tech, France) using an epoxy mold imprinted with the negative design.

An example of synthesis for realizing the micro-reactor design:

first, the polymer sheet and the mold were pre-heated at the pressing temperature, 165°C, in the Sublym100TM press for 30 minutes. Then, vacuum was applied for 760 seconds, still at 165°C, before release. The molded FlexdymTM sheet was unfolded from the mold and stored between two Teflon sheets for later use.

An example of the hydrothermal synthesis:

first, 4-inch circular Si wafers (substrate 2) were spin-coated (200 $\mu$L/cm$^2$) with a precursor solution (seed solution 11) composed of 10g of poly-vinyl-alcohol (PVA) and 1g of Zinc Acetate dissolved into 100 mL of deionized (DI) water (R = 18.2 M$\Omega$). The substrates 2 were then calcined at 500°C during 3 hours, to remove the PVA. After the calcination, the Flexdym™ chip (thermoplastic chip 3) was bound into the substrate 2 for 4 hours at 120°C in an oven, without external pressure.

In situ ZnO nanowire growth inside the microreactor 1 can be obtained by mixing equal quantities of a 0,075 mol/L $Zn(NO_3)_2$ solution and a 0,0375 mol/L Hexamethylenetetramine (HMTA) solution.

This example of growth solution 15 was heated at the desired temperature (80°C, 85°C or 90°C) using a thermostated bath and injected into the microreactor 1 with a syringe pump 10, at a constant flow rate for the desired growth time. During the circulation of the growth solution 15, the microreactor 1 was placed on a heating plate 7 to ensure a constant temperature throughout the process.

The obtained nanowires 16 were characterized by SEM observation, by taking apart the microreactor 1 and imaging the nanowires directly. The photocatalytic experiments were conducted by degrading a solution containing 10 $\mu$mol/L of AR14, pumped into the microreactor 1 at a constant flow rate of 200 $\mu$L/min with a syringe pump 10, under UV irradiation. The surface of the tested microreactors was maintained at 10 cm of the UV lamp (Hamamatsu LC8, Japan) corresponding an UV intensity of 35 mW/cm$^2$. The photodegradation of the studied dye was monitored using UV-visible spectrometry (Perkin-Elmer, Lambda 35).

Flowrate is a controllable parameter to growth of the nanowires. A flowrate too slow can prevent the full filling of the microchannels 4, whereas a too fast flowrate reduces the contact with the seed layer and prevents the growth of the NWs, as the precursor molecules cannot diffuse to the wall (seed layer). The ratio between convection and diffusion is represented by the Peclet number, calculated according to the following equation:

$$Pe = \frac{L_c \cdot v}{D}$$

Where $L_c$ stands for characteristic length, $v$ stands for the velocity of the liquid in the microchannels, and $D$ stands for the diffusion coefficient of the molecules. A Peclet number higher than 1 means that the diffusion of the molecules in the liquid is slower than the liquid velocity, thus that the molecules do not have the time to reach the bottom of the microchannels 4 when they get through. This would mean that most of the growth solution molecules do not have the time to reach the seeds, resulting in a slowed growth reaction. Furthermore, a too high pressure, induced by a high flowrate, could lead to a leakage of the chip, damaging the micro-reactor 1.

To ensure the integrity of the micro-reactor 1 and improve the chances of contact between the suspended precursor molecules and the seedlayer 12, the chosen flowrates were fixed at values between 100 μL/min and 400 μL/min, leading to Peclet numbers between 0.2 and 0.9, and preferably, between 0.22 and 0.87.

For instance, the ZnO nanowires (NWs) were grown for 1 hour at the temperature of 80°C. Those parameters were chosen to ensure that the NWs were long enough to perform the photocatalytic degradation of the AR14 and reduce the risk of precipitation or evaporation. The effect of the flow velocity of the precursor solution (seed solution 11) on photocatalytic efficiency are shown in Figure 6.

The good results were obtained for NWs grown at a flowrate of 200 μL/min. This means that the Peclet number is of 0.44, and so that the diffusion transfer is roughly twice as fast as the convection (flow transfer).

As shown in the SEM images, a homogenous NWs layer is obtained on samples surface at 100 and 200 μL/min. The difference in efficiency between the 100 μL/min and the 200 μL/min samples is due to the characteristics of the NWs layer: as it is visible on the SEM image, the surface of the 100 μL/min sample is not totally covered by NWs, whereas the surface of the 200 μL/min sample is fully covered. Furthermore, the mean diameter of the NWs vary from 41 ± 5 nm for the 100 μL/min one to 58 ± 5 nm for the 200 μL/min.

The second synthesis parameter studied is the growth time. A too short growth time would lead to an incomplete nanowires growth, resulting in a lack of surface area, and such, a less of efficiency. However, a too long growth time could lead to nanowires with an excessive length that may block the microchannels 4.

Reactions are supposed to occur faster in microfluidic reactors 1 compared to their batch counterparts. It has already been demonstrated that reduced reaction times lead to semiconductor NWs with lengths equals or even greater than semiconductor NWs grown in batch conditions. For instance, the synthesis of 2-μm-long ZnO NWs in few minutes by using a continuous flowrate in capillary tubes has been reported. Thus, the reduction of the growth time was followed, by using timeframes ranging from 30 minutes to 1h30.

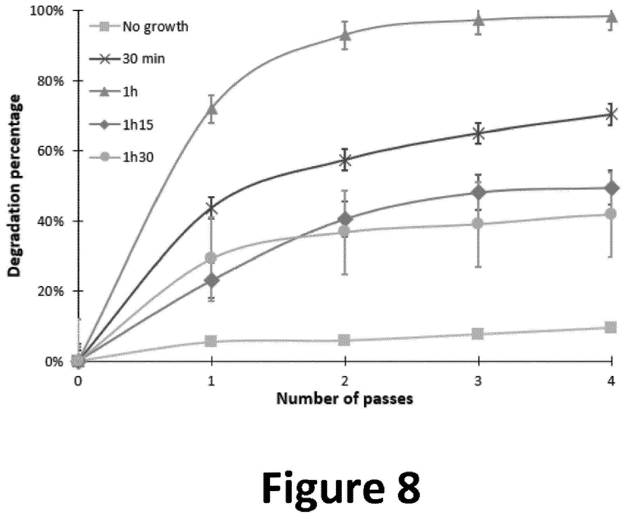

A temperature of 80°C and a flowrate at 200 μL/min were selected, for this example. The effects of growth time on photocatalytic efficiency are shown in Figure 8.

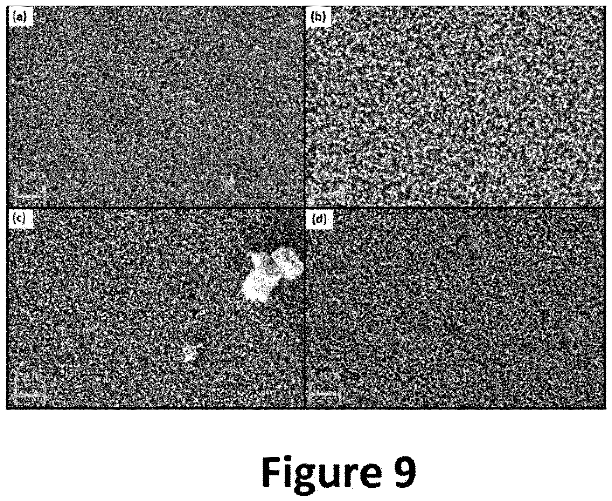

Figure 8 indicates that the good photocatalytic performance of as fabricated microreactor 1 was obtained for a growth time of 1h. The SEM images of the different NWs layers are presented in Figure 9.

The SEM images give access to the factors affecting the efficiency of samples, which are summarized in the following Table:

| Growth time | Mean NWs density (nw/$\mu m^2$) | Mean diameter (nm) |
| --- | --- | --- |
| 30 minutes | 74 ± 5 | 39 ± 5 |
| 1h | 64 ± 5 | 58 ± 5 |
| 1h15 | 80 ± 5 | 45 ± 5 |
| 1h30 | 83 ± 5 | 41 ± 5 |

Those two parameters help to understand the differences in efficiency measured between the samples. Starting with the mean density, more NWs means more contact area, and should lead to an improved photocatalytic efficiency. However, when the density reaches a certain threshold, the NWs start to cover each other, preventing the liquid and the light from reaching the nanostructures. This diminishes the NWs area available for the photocatalytic reaction, and so reduces the photocatalytic efficiency.

As for the diameter, a bigger diameter means more surface area available for the photocatalysis, thus a bigger efficiency. However, the mean diameters have to be linked with the density to have an overall picture of the efficiency of the samples.

Finally, the last studied parameter was the growth temperature. This temperature should not be too low, to ensure the nanowires growth is taking place. However, if it is too high, the growth solution 15 might precipitate into the polytetrafluorethylene (Teflon®) tube, or start to evaporate, creating gas bubbles into the microchannels 4 and blocking them in both cases. Advantageously, the selected growth temperatures were 80°C, 85°C and 90°C.

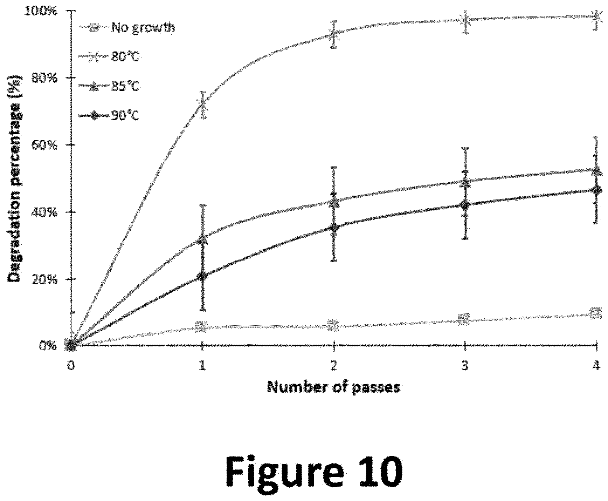

The flowrate can be fixed at 200 μL/min, and the growth time at 1h. The results of the influence of growth temperature are presented in Figure 10.

As the growth solution 15 can precipitate in the Teflon® tube, it can also precipitate in the microchannels 4, thus creating blockage in some microchannels 4, and even engulfing nanowires, preventing the dye molecules to reach them, leading to a reduced photocatalytic efficiency, when the temperature parameters do not respect the temperature orders of magnitude of the present invention.

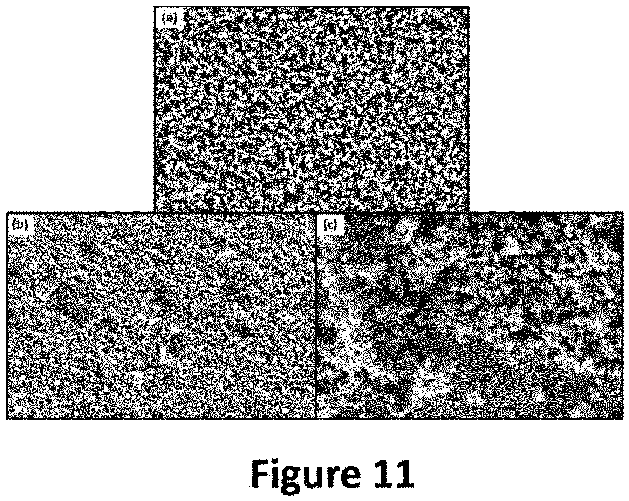

The obtained nanostructures via the synthesis at different temperatures have also been observed under SEM, as shown in Figure 11.

The SEM images show drastic changes in the morphologies of the nanostructures with the augmentation of the temperature: increasing the temperature from, for example, 80°C to 85°C leads to the apparition of empty spaces in the nanowires layer and the formation of larger structures, similar to nanorods, empty spaces allowing the polluted fluid to move through the channels without blockage. The NWs also are less large than the ones synthesized at 80°C.

Increasing the temperature further, from 85°C to 90°C, leads to nanostructures that are similar to agglomerates of nanorods, while the nanowires layer seems to have disappeared. There are still some empty spaces in the nanostructure layer, and those are bigger than the ones obtained at 85°C, empty spaces allowing the polluted fluid to move through the channels 4 without blockage.

Those observations are in accordance with the hypothesis that the increase of the temperature of the solution leads to the apparition of air bubbles inside of the liquid flow. Those air bubbles then stop the growth of the nanowires, by preventing the growth solution to bring reagents in contact with the seeds, when the synthesis temperature is too high and does not respect the parameters of the present invention.

Researchers and applicants successfully created a high-volume, low-pressure photocatalytic microreactor 1 by synthesizing semiconductor nanowires inside a microfluidic reactor 1, using an environment-friendly hydrothermal method. The synthesis conditions were studied, and the optimal conditions were, for example, a flowrate of 200μL/min, a growth temperature of 80°C and a growth time of 1h. Under these conditions, the micro-reactor 1 achieved a 98% degradation rate over 4 passes, the rough equivalent of 40 seconds under UV irradiation.

Presented results shows that 1) NWs growth at higher flowrates leads to the agglomeration of nanostructures in the form of big nanostructures clusters; 2) lower or higher growth times lead to a loss in specific surface, and 3) higher temperatures mean holes in the nanostructures layer, as well as a change in the nanostructures shape; all of which result in a loss of photocatalytic efficiency.

Those results are really promising, as suggest that it is possible to produce environment-friendly and very efficient microreactors 1 for the photocatalytic depollution of fluid (more precisely, water), even with intricate designs, and high flowrate throughput.

By studying these different parameters and optimising them, the present invention makes it possible to obtain a microreactor 1 with a photocatalyst semi-conductor nanostructure for fluid purification.

**Claims**

1. Method for synthesizing photocatalyst semi-conductor nanostructure (16) into a continuous flow rate microfluidic reactor (1) for fluid purification,
   comprising the following steps:

   - step 1: realizing a nanocristallite seedlayer (12) on a substrate (2) by applying a homogeneous layer (13) of a seed solution (11) composed by precursors of photocatalyst semi-conductor;
   - step 2: realizing a solid thermoplastic chip (3) having one structured layer with:

     • walls (14) intended to be in contact with the substrate (2) to form microfluidic channels (4),
     • inputs (5) and outputs (6) of a fluid intended to circulate in the channels (4) between the inputs (5) and the outputs (6);
     the thermoplastic chip (3) letting UV light and visible light pass through, the thermoplastic chip (3) being an adhesive polymer or being a polymer with an adhesive layer;

   - step 3 : fixing the thermoplastic chip (3) onto the substrate (2) which presents the nanocristallite seedlayer

(12), without deforming the structured layer, the assembly of the thermoplastic chip (3) with the substrate (2) forming the microfluidic reactor (1) with the microfluidic channels (4) which present the nanocristallite seedlayer (12) of the semi-conductor on the substrate (2) between the walls (14) ;
- step 4 : injecting and circulating a nanowire growth solution (15) into the microfluidic reactor (1) by inputs (5) and outputs (6), at a constant flowrate, via a fluid circuit (9) linked to the inputs (5) and outputs (6) of the microfluidic reactor (1), the microfluidic reactor (1) being placed on heating means (7) so as to obtain nanowires (16) which grow from nanocristallite seedlayer (12) from the substrate (2) between the walls (14) of the microfluidic reactor (1).

2. Method according to the previous claim, wherein the seed solution (11) is composed by semi-conductor ions with polymer-based solution or aqueous solution, and the nanowire growth solution (15) is composed of the precursors of photocatalyst semi-conductor.

3. Method according to any one of the previous claims, wherein the seed solution (11) is composed by ZnO or $TiO_2$ ions.

4. Method according to any one of claims 1 to 3, wherein :

- the substrate (2) is composed of silicon or glass, and during the step of realizing a nanocristallite seedlayer (12) on a substrate (2), the substrate (2) is heated at a temperature superior to 200°C, or
- the substrate (2) is a thermoplastic polymer, and during the step of realizing the nanocristallite seedlayer (12) on the substrate (2), the substrate (2) is heated at a temperature inferior to 120°C.

5. Method according to any one of claims 1 to 4, wherein the homogeneous layer (13) is applied by spin coating.

6. Method according to any one of claims 1 to 5, wherein the substrate (2) is a Si-wafer, glass-wafer, or quartz wafer.

7. Method according to any one of claims 1 to 6, wherein the solid thermoplastic chip (3) comprises:

- a block copolymer, the block copolymer having a glass transition temperature below 0° C, and having a Young's modulus of less than 10 MPa; and/or
- a styrenic thermoplastic.

8. Method according to any one of claims 1 to 7, wherein the semi-conductor nanostructure (16) is doped, with metals.

9. Method according to any one of claims 1 to 8, wherein the parameters for having homogeneous nanowires (16) inside microfluidic reactor (1) are: growth solution (15) flowrate, temperature of the heating means (7), temperature of the growth solution (15), concentration of the growth solution (15).

10. Method according to claim 9, wherein the parameters being optimized during the step for circulating a nanowire growth solution (15), with a temperature of the heating means (7) between 75°C and 95°C, during 30-90 min, with corresponding Peclet Number between 0.2 and 0.5.

11. Method according to any one of claims 1 to 10, wherein the continuous flow rate microfluidic reactor (1) is high flow rate microfluidic reactor, the structured layer enabling a debit superior to 5 $m^3$/day per $m^2$ of microfluidic chamber surface at pressure < 2 bar, with Reynold's number inferior to 1500.

12. Microfluidic reactor (1) having photocatalyst semi-conductor nanostructure (16) for fluid purification, obtained with the method according to any one of claims 1 to 11.

13. Microfluidic reactor (1) according to claim 12, comprising a fluidic purification network, the fluidic purification network being a three-dimensional array of microfluidic channels, the microfluidic reactor comprising a plurality of distribution channels and a plurality of collection channels, the fluidic purification network connecting the distribution channels and the collection channels and being implemented at least by an array of microfluidic channels connected in parallel.

14. Microfluidic reactor (1) according to any one of claims 12 to 13, wherein the size of the microfluidic reactor (1) is at least 10 $cm^2$.

15. System (8) for fluid purification with :

• the microfluidic reactor (1) according to any one of claims 12 to 14, having photocatalyst semi-conductor nanostructures (16) for fluid purification, and
• a closed fluid circuit linked to the inputs (5) and outputs (6) of the microfluidic reactor (1), to recirculate the fluid with the pollutants in the channels (4) of the microfluidic reactor (1) to degrade the polluants.

16. Use of the system (8) according to claim 15, to depollute by several passages of the fluid with pollutants.

Step 1.i)

Step 1.ii)

Figure 1

Figure 2

Step 4

Figure 3

Figure 4

Figure 4

**Figure 5**

Figure 6

# Figure 7

# Figure 8

# Figure 9

Figure 10

# Figure 11

Europäisches Patentamt
European Patent Office
Office européen des brevets

## EUROPEAN SEARCH REPORT

Application Number

EP 21 16 2159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO RUI ET AL: "Controllable preparation of ultralong ZnO nanowire arrays based on microfluidics", 2017 SYMPOSIUM ON PIEZOELECTRICITY, ACOUSTIC WAVES, AND DEVICE APPLICATIONS (SPAWDA), IEEE, 27 October 2017 (2017-10-27), pages 345-349, XP033347875, DOI: 10.1109/SPAWDA.2017.8340354 [retrieved on 2018-04-17] | 12 | INV. B01L3/00 B01J19/00 B01J21/06 B01J23/06 B01J35/00 C01G9/02 B82Y40/00 H01L33/28 C02F1/00 |
| Y | * page 346, column 2; figures 2F, 4, 6 * * page 346, column 2, paragraph 2 - page 347, column 1, paragraph 1 * | 1-11,13, 14 | |
| X | US 2011/143464 A1 (CHOW BRIAN YICHIUN [US] ET AL) 16 June 2011 (2011-06-16) | 12 | |
| Y | * paragraph [0800]; figure 17 * | 1-11,13, 14 | |
| Y | DARIO CAMBIÉ ET AL: "Applications of Continuous-Flow Photochemistry in Organic Synthesis, Material Science, and Water Treatment", CHEMICAL REVIEWS, vol. 116, no. 17, 3 March 2016 (2016-03-03), pages 10276-10341, XP055549516, US ISSN: 0009-2665, DOI: 10.1021/acs.chemrev.5b00707 * page 10323, column 2, paragraph 2 * * page 10322 * | 8,15,16 | |
| Y,D | US 2020/277205 A1 (CARGOU SÉBASTIEN [FR]) 3 September 2020 (2020-09-03) * paragraph [0158]; figure 13 * | 13,15,16 | |

TECHNICAL FIELDS SEARCHED (IPC)

B01L
C01G
B01J
B82Y
H01L
C02F

The present search report has been drawn up for all claims

| Place of search | Date of completion of the search | Examiner |
|---|---|---|
| The Hague | 17 August 2021 | Campbell, Paul |

EPO FORM 1503 03.82 (P04C01)

## EP 4 056 273 A1

### ANNEX TO THE EUROPEAN SEARCH REPORT
### ON EUROPEAN PATENT APPLICATION NO.

EP 21 16 2159

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2021

| Patent document cited in search report | Publication date | Patent family member(s) | Publication date |
|---|---|---|---|
| US 2011143464 A1 | 16-06-2011 | NONE | |
| US 2020277205 A1 | 03-09-2020 | CN 111670071 A | 15-09-2020 |
| | | EP 3681626 A1 | 22-07-2020 |
| | | FR 3070874 A1 | 15-03-2019 |
| | | US 2020277205 A1 | 03-09-2020 |
| | | WO 2019053219 A1 | 21-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019053219 A

**Non-patent literature cited in the description**

- **BYZYNSKI et al.** The interplay between morphology and photocatalytic activity in ZnO and N-doped ZnO crystals. *Mater. Des.,* 2017, vol. 120, 363-375

- **M.C. YEBER et al.** Photocatalytic degradation of cellulose bleaching effluent by supported TiO2 and ZnO. *Chemosphere,* 2000, vol. 41, 1193-1197